# EUROPÄISCHE PATENTSCHRIFT

(11) **EP 3 181 931 B1**
(45) Veröffentlichungstag und Bekanntmachung des Hinweises auf die Patenterteilung: **28.03.2018**
(21) Anmeldenummer: 15200280.4
(22) Anmeldetag: 15.12.2015
(51) Int. Cl.: F16D 3/06, F16D 3/26, F16D 1/10

(54) **LÄNGENAUSGLEICH FÜR EINE GELENKWELLE**
LENGTH BALANCING FOR A DRIVE SHAFT
ÉQUILIBRAGE DES LONGUEURS POUR UN ARBRE DE TRANSMISSION

(43) Veröffentlichungstag der Anmeldung: 21.06.2017
(73) Patentinhaber: Spicer Gelenkwellenbau GmbH, 45143 Essen (DE)
(72) Erfinder: Stein, Thomas, 45128 Essen (DE); Meineke, Manfred, 58454 Witten (DE); Sarzaiem, Hamed, 44809 Bochum (DE)
(74) Vertreter: Neumann Müller Oberwalleney & Partner Patentanwälte

(56) Entgegenhaltungen:
- EP-A1- 1 384 923
- WO-A1-2005/057038
- DE-A1- 2 849 541
- FR-A- 1 374 262

## Beschreibung

Die Erfindung betrifft einen Längenausgleich für eine Gelenkwelle, wobei der Längenausgleich ein erstes Drehelement mit einer ersten Längsverzahnung und ein zweites Drehelement mit einer zweiten Längsverzahnung aufweist. Die erste Längsverzahnung und die zweite Längsverzahnung sind zueinander in Verzahnungseingriff und zueinander axial verschiebbar, so dass Drehmoment zwischen den beiden Drehelementen übertragen werden kann und eine Verschiebung zum Längenausgleich ermöglicht wird. In einem Endbereich des ersten Drehelements ist eine Zahnlücke zwischen zwei Längszähnen der ersten Längsverzahnung versperrt. Ferner ist die radiale Höhe eines Längszahns der zweiten Längsverzahnung gegenüber den übrigen Längszähnen der zweiten Längsverzahnung derart reduziert, dass ausschließlich der in der radialen Höhe reduzierte Längszahn in die versperrte Zahnlücke der ersten Längsverzahnung axial eingeschoben werden kann.

Ein solcher Längenausgleich ist aus der DE 1 081 286 B bekannt. Um eine vorbestimmte gegenseitige Winkellage der beiden Drehelemente zueinander bei der Montage der Drehelemente zu gewährleisten, ist an einem Ende des ersten Drehelements ein Einsatzstück befestigt, welches mit einem Ansatz in eine Keilnut der ersten Längsverzahnung, welche als Keilwellenverzahnung ausgebildet ist, eingreift. Ein Längszahn des zweiten Drehelements ist entfernt. Beim Montieren der beiden Drehelemente ineinander, d.h. beim axialen Ineinanderschieben der beiden Längsverzahnungen, kann kein Längszahn des zweiten Drehelements in die Keilnut mit dem Einsatzstück eingesetzt werden. Lediglich in der einen Winkelstellung, in der die Keilnut mit dem Einsatzstück und der entfernte Keil des zweiten Drehelements im selben Winkel zueinander angeordnet sind, lassen sich die Drehelemente miteinander verbinden bzw. ineinander schieben. Das Einsatzstück ist hierbei als Federdrahtklemme ausgebildet, welche U-förmig gestaltet ist und zwei parallele Ansätze aufweist, die über ein Zwischenstück miteinander verbunden sind. Einer der parallelen Ansätze greift in die Keilnut ein. Der andere parallele Ansatz ist in eine zentrale Bohrung des ersten Drehelements, welches als Wellenzapfen gestaltet ist, eingeführt.

Nachteilig wirkt sich aus, dass ein separates, leicht entfernbares und damit nicht verliersicheres Bauteil vorgesehen ist, welches zudem eine erhebliche zusätzliche Masse darstellt, welche zu Unwuchten führt.

Aufgabe der vorliegenden Erfindung ist es, einen Längenausgleich für eine Gelenkwelle bereitzustellen, welche einfach aufgebaut ist und eine möglichst geringe Unwucht verursacht.

Die Aufgabe wird durch einen eingangs genannten Längenausgleich gelöst, wobei die besagte Zahnlücke durch einen durch Umformen oder durch eine mittels einer stoffschlüssigen Verbindung hergestellten Sperrabschnitt des ersten Drehelements oder durch einen Stift, der in einer Bohrung des ersten Drehelements sitzt, versperrt ist, wobei der Sperrabschnitt oder der Stift in der Zahnlücke oder in axialer Verlängerung zur Zahnlücke angeordnet ist.

Sofern das Sperrelement durch Umformen hergestellt wird, wird keine zusätzliche Masse dem ersten Drehelement hinzugefügt, was sich günstig auf Unwuchten auswirkt. Beim Vorsehen eines Sperrelements, welches durch eine stoffschlüssige Verbindung mit dem ersten Drehelement verbunden ist, wird, im Vergleich zum Stand der Technik, lediglich eine sehr geringe zusätzliche Masse aufgebracht. Die Lösung mit Stift, die in einer Bohrung des ersten Drehelements sitzt, führt ebenfalls zu nur sehr geringen zusätzlichen Massen, da durch die Einbringung der Bohrung in das erste Drehelement zunächst Masse entfernt wird, welche dann durch den Stift wieder ersetzt wird und, da der Stift vorstehend ausgebildet ist, nur eine geringe zusätzliche Masse hinzugefügt wird.

Darüber hinaus handelt es sich um sehr einfache Maßnahmen, um eine Montage lediglich in einer Winkellage zu gewährleisten, wobei selbst beim Vorsehen separater Elemente eine Verliersicherung gewährleistet ist.

Der bezüglich seiner radialen Höhe reduzierte Längszahn kann über seine gesamte radiale Höhe reduziert sein, so dass kein Längszahn mehr vorhanden ist, oder lediglich teilweise in der radialen Höhe reduziert sein, also gekürzt sein.

Hierbei kann der reduzierte Längszahn der zweiten Längsverzahnung derart ausgebildet sein, dass er bei einer Drehmomentübertragung zwischen der ersten Längsverzahnung und der zweiten Längsverzahnung in Anlage zu einem die versperrte Zahnlücke bildenden Längszähne gelangt. Somit nimmt der reduzierte Längszahn an der Drehmomentübertragung teil, was zu einer gleichmäßigeren Belastung der Längszähne über den Umfang führt.

Es können mehrere Zahnlücken versperrt sein und mehrere Längszähne in der radialen Höhe reduziert sein. Vorzugsweise sind zwei diametral gegenüberliegende Zahnlücken der ersten Längsverzahnung versperrt und die radiale Höhe zweier diametral gegenüberliegender Längszähne der zweiten Längsverzahnung reduziert. Somit ist eine Montage des ersten Drehelements und des zweiten Drehelements in zwei unterschiedlichen Winkellagen, die 180°zueinander verdreht sind, möglich. Dies kann auch dadurch erreicht werden, dass lediglich eine Zahnlücke der ersten Längsverzahnung versperrt ist und zwei Längszähne der zweiten Längsverzahnung in der radialen Höhe reduziert sind. Grundsätzlich lassen sich auch andere Anzahlen von versperrten Zahnlücken und in der radialen Höhe reduzierten Längszähnen vorsehen, um eine Montage in verschiedenen Winkellagen zu ermöglichen.

Bei Gelenkwellen in Form von Kreuzgelenkwellen ist die Montage in genau zwei 180° zueinander versetzten Winkellagen bevorzugt. Bei einem Längenausgleich für eine Gelenkwelle ist das erste Drehelement mit einer ersten Gelenkgabel eines ersten Kreuzgelenks und das zweite Drehelement mit einer zweiten Gelenkgabel eines zweiten Kreuzgelenks verbunden. Um eine gleichförmige Drehbewegung zu gewährleisten, ist es erforderlich, dass die beiden Gelenkgabeln spiegelbildlich oder 90° verdreht zueinander angeordnet sind. Dies lässt sich dadurch erzielen, dass das erste Drehelement und das zweite Drehelement z. B. in zwei 180° zueinander verdrehten Winkellagen miteinander montierbar sind.

Die Bohrung kann als Gewindebohrung und der Stift als Gewindestift ausgebildet sein. Somit ergibt sich eine einfache Montage des Stifts in der Gewindebohrung. Grundsätzlich ist es jedoch auch denkbar, dass ein Stift in eine Gewindebohrung mit Presssitz eingeführt wird.

Vorzugsweise ist vorgesehen, dass in einem Endbereich des ersten Drehelements die Zahnlücke durch eine Einprägung in eine Stirnfläche oder durch einen Stift, der in einer Axialbohrung in der Stirnfläche sitzt, versperrt ist. Besonders vorteilhaft ist dann, dass die Längszähne der ersten Längsverzahnung von der Stirnfläche ausgehend verlaufen. Insbesondere das Einbringen einer Einprägung in die Stirnfläche, durch welche Material radial nach außen getrieben wird, um eine Zahnlücke der ersten Längsverzahnung zu versperren, ist als besonders vorteilhaft anzusehen, da keine zusätzlichen Elemente und keine zusätzlichen Massen an dem ersten Drehelement befestigt werden müssen und das Versperren der einen Zahnlücke lediglich durch einen weiteren einfachen Verfahrensschritt erzielbar ist.

In einer Ausgestaltung der Erfindung ist das erste Drehelement ein Wellenzapfen und die erste Längsverzahnung eine Außenlängsverzahnung. Darüber hinaus ist das zweite Drehelement eine Nabenhülse und die zweite Längsverzahnung eine Innenlängsverzahnung. Die Innenlängsverzahnung der Nabenhülse kann hierbei durch Kaltpressen hergestellt sein. Hierbei ist es besonders vorteilhaft, wenn die radiale Höhe zweier diametral gegenüberliegender Längszähne der zweiten Längsverzahnung reduziert sind, damit beim Kaltpressen entlang der Längsachse der Nabenhülse keine Querkräfte quer zur Längsachse auftreten, die zu einem außeraxialen Verlauf des Kaltpressvorgangs führen könnten.

Ferner wird die Aufgabe durch eine Gelenkwelle mit einem vorgenannten Längenausgleich gelöst, wobei die Gelenkwelle ein mit dem ersten Drehelement fest verbundenes erstes Gelenk und ein mit dem zweiten Drehelement fest verbundenes zweites Gelenk aufweist. Die beiden Gelenke sind hierbei vorzugsweise als Kreuzgelenke gestaltet.

Ein bevorzugtes Ausführungsbeispiel einer Gelenkwelle mit einem erfindungsgemäßen Längenausgleich wird im Folgenden anhand der Figuren näher erläutert.

Hierin zeigt
- Figur 1: einen Längsschnitt einer erfindungsgemäßen Gelenkwelle mit einem Längenausgleich,
- Figur 2: einen Querschnitt durch den Längenausgleich entlang der Schnittlinie II-II gemäß Figur 1, und
- Figur 3: einen Ausschnitt eines Längsschnitts durch einen Wellenzapfen des Längenausgleichs gemäß Figur 1.

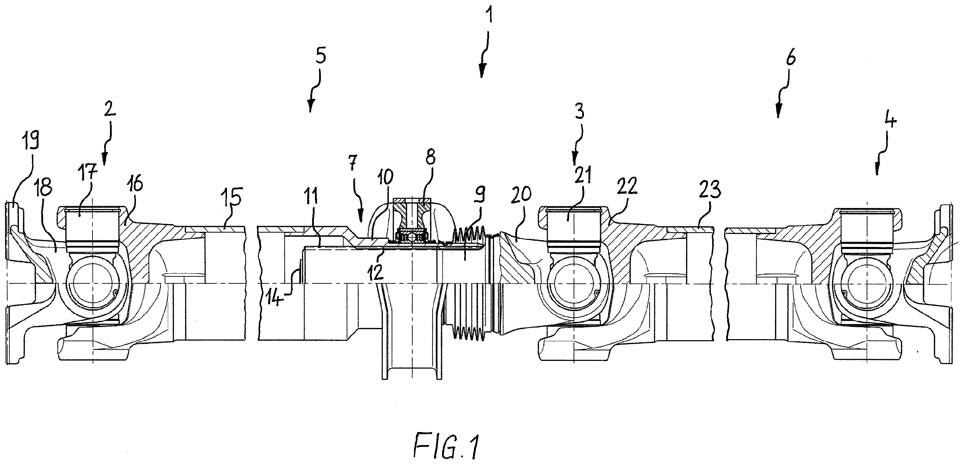

Figur 1 zeigt eine Gelenkwelle 1 mit drei Gelenken, nämlich einem ersten Gelenk 2, einem zweiten Gelenk 3 und einem dritten Gelenk 4. Alle Gelenke 2, 3, 4 sind als Kreuzgelenke gestaltet und unterteilen die Gelenkwelle 1 in einen ersten Gelenkwellenabschnitt 5 zwischen dem ersten Gelenk 2 und dem zweiten Gelenk 3 und einem zweiten Gelenkwellenabschnitt 6 zwischen dem zweiten Gelenk 3 und dem dritten Gelenk 4.

In dem ersten Gelenkwellenabschnitt 5 ist ein Längenausgleich 7 vorgesehen, so dass das erste Gelenk 2 und das dritte Gelenk 4 entlang einer Längsachse L axial zueinander verstellt werden können. Der zweite Gelenkwellenabschnitt 6 ist in der Länge nicht einstellbar.

Im Bereich des Längenausgleichs 7 ist die Gelenkwelle 1 über ein Stützlager 8 abgestützt.

Der Längenausgleich 7 weist ein erstes Drehelement 9 in Form eines Wellenzapfens sowie ein zweites Drehelement 10 in Form einer Nabenhülse auf. Die Nabelhülse 10 sitzt hierbei auf dem Wellenzapfen 9 auf und ist in axialer Richtung verschiebbar gehalten. Hierzu weist der Wellenzapfen 9 eine erste Längsverzahnung 11 auf. Die Nabenhülse 10 weist eine zweite Längsverzahnung 12 auf. Die beiden Längsverzahnungen 11, 12 sind komplementär zueinander angeordnet und greifen ineinander ein, so dass zum einen Drehmoment um die Längsachse L übertragen werden kann und zum anderen ein Verschieben der beiden Drehelemente 9, 10 zueinander in Richtung der Längsachse L gewährleistet ist.

Die erste Längsverzahnung 11 weist Längszähne 13 auf, die von einer Stirnfläche 14 des Wellenzapfens 9 ausgehen und sich in axialer Richtung erstrecken. Die erste Längsverzahnung 11 ist als Außenlängsverzahnung ausgebildet.

Die zweite Längsverzahnung 12 weist Längszähne 24 auf, die komplementär zu den Längszähnen 13 der ersten Längsverzahnung 11 ausgebildet sind, wobei die zweite Längsverzahnung 12 als Innenlängsverzahnung ausgebildet ist.

Die Nabenhülse 10 ist mit einem Rohr 15 drehfest verbunden, welches an einem der Nabenhülse 10 abgewandten Ende mit einer Innengabel 16 des ersten Gelenks 2 verbunden ist. Die Innengabel 16 ist über ein Zapfenkreuz 17 gelenkig mit einer Außengabel 18 verbunden. Die Außengabel 18 weist einen Flansch 19 zum Verbinden der Gelenkwelle 1 mit einem angetriebenen oder antreibenden Bauteil auf.

Der Wellenzapfen 9 des Längenausgleichs 7 ist mit einer ersten Gabel 20 des zweiten Gelenks 3 verbunden. Die erste Gabel 20 ist über ein Zapfenkreuz 21 gelenkig mit einer zweiten Gabel 22 verbunden. Die zweite Gabel 22 ist über ein Rohr 23 mit dem dritten Gelenk 4 verbunden, wobei das dritte Gelenk 4 mit einem angetriebenen oder antreibenden Element verbunden werden kann.

Um eine gleichmäßige Drehbewegung am mit dem ersten Gelenk 2 verbundenen Element und am mit dem dritten Gelenk 4 verbundenen Element zu gewährleisten, muss zum einen gewährleistet sein, dass die Winkel die Beugewinkel am ersten Gelenk 2 und am dritten Gelenk 4 gleich groß sind. Zum anderen müssen die Außengabeln des ersten Gelenks 2 und des dritten Gelenks 4 parallel zueinander ausgerichtet sein. Daher ist es bei der Montage des Längenausgleichs 7 wichtig, dass das erste Drehelement 9 und das zweite Drehelement 10 in nur zwei Winkellagen zueinander montierbar sind.

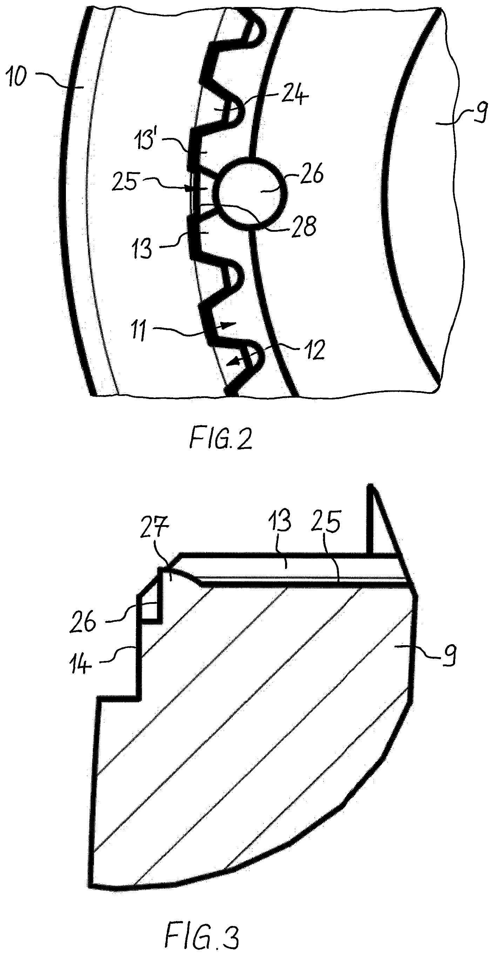

Dies wird in der vorliegenden Ausführungsform dadurch erreicht, dass, wie in den Figuren 2 und 3 dargestellt, eine Einprägung 26 in die Stirnfläche 14 durch Umformen eingebracht wird. Die Einprägung 26 fluchtet in axialer Richtung betrachtet mit einer Zahnlücke 25 zwischen zwei Längszähnen 13, 13' der ersten Längsverzahnung 11.

Wie insbesondere aus Figur 3 ersichtlich ist, ergibt sich durch das Einpressen der Einprägung 26 in die Stirnfläche 14 eine Materialanhäufung nach radial außen, welche einen Sperrabschnitt 27 bildet, der zwischen den Längszähnen 13, 13' der Zahnlücke 25 angeordnet ist.

Grundsätzlich ist es auch denkbar, dass die Einprägung 26 in eine Stirnfläche eingebracht ist, welche Bestandteil eines zylindrischen Ansatzes ist, an den sich erst die Längszähne 13, 13' mit axialem Abstand zur Stirnfläche anschließen. Wesentlich ist, dass der Sperrabschnitt 27 mit der Zahnlücke 25 in axialer Richtung fluchtet.

Die zweite Längsverzahnung 12 weist einen in der radialen Höhe reduzierten Längszahn 28 auf. Dieser gekürzte Längszahn 28 weist eine geringere radiale Höhe auf, als die übrigen Längszähne 24 der zweiten Längsverzahnung 12. Die radiale Höhe des Sperrabschnitts 27 ist hierbei derart ausgebildet, dass die nicht gekürzten Längszähne 24 der zweiten Längsverzahnung 12 nicht axial in die Zahnlücke 25 eingeschoben werden können. Bei der Montage des Wellenzapfens 9 in die Nabenhülse 10 würden daher die nicht gekürzten Längszähne 24 mit dem Sperrabschnitt 27 kollidieren, wodurch eine Montage vermieden wird.

Im Gegensatz dazu weist der gekürzte Längszahn 28 eine radiale Höhe auf, die so gering ist, dass der gekürzte Längszahn 28 über den Sperrabschnitt 27 geschoben werden kann.

Mit anderen Worten weisen die ungekürzten Längszähne 24 der zweiten Längsverzahnung 12 einen Kopfkreisdurchmesser auf, der geringer ist als der Kopfkreisdurchmesser des Sperrabschnitts 27, wohingegen der Kopfkreisdurchmesser des gekürzten Längszahns 28 größer ist als der Kopfkreisdurchmesser des Sperrabschnitts 27.

Grundsätzlich ist auch denkbar, dass der Sperrabschnitt 27 an der Innenlängsverzahnung angeordnet ist und die Außenlängsverzahnung einen gekürzten Längszahn aufweist.

Insgesamt sind in die Stirnfläche 14 zwei Einprägungen 26 vorgesehen, die diametral gegenüberliegend zueinander angeordnet sind. Äquivalent dazu sind zwei gekürzte Längszähne 28 vorgesehen, die ebenfalls diametral zueinander angeordnet sind. Somit können der Wellenzapfen 9 und die Nabenhülse 10 in zwei 180° zueinander gedrehten Winkelpositionen montiert werden.

### Bezugszeichenliste

- 1: Gelenkwelle
- 2: erstes Gelenk
- 3: zweites Gelenk
- 4: drittes Gelenk
- 5: erster Gelenkwellenabschnitt
- 6: zweiter Gelenkwellenabschnitt
- 7: Längenausgleich
- 8: Stützlager
- 9: erstes Drehelement (Wellenzapfen)
- 10: zweites Drehelement (Nabenhülse)
- 11: erste Längsverzahnung
- 12: zweite Längsverzahnung
- 13, 13': Längszahn der ersten Längsverzahnung
- 14: Stirnfläche
- 15: Rohr
- 16: Innengabel
- 17: Zapfenkreuz
- 18: Außengabel
- 19: Flansch
- 20: erste Gabel
- 21: Zapfenkreuz
- 22: zweite Gabel
- 23: Rohr
- 24: Längszahn der zweiten Längsverzahnung
- 25: Zahnlücke
- 26: Einprägung
- 27: Sperrabschnitt
- 28: in der Höhe reduzierter Längszahn
- L: Längsachse

## Patentansprüche

1. Längenausgleich (7) für eine Gelenkwelle (1), wobei der Längenausgleich (7) Folgendes aufweist:
ein erstes Drehelement (9) mit einer ersten Längsverzahnung (11) und
ein zweites Drehelement (10) mit einer zweiten Längsverzahnung (12),
wobei die erste Längsverzahnung (11) und die zweite Längsverzahnung (12) in Verzahnungseingriff stehen und axial zueinander verschiebbar sind,
wobei in einem Endbereich des ersten Drehelements (9) eine Zahnlücke (25) zwischen zwei Längszähnen (13, 13') der ersten Längsverzahnung (11) versperrt ist und
wobei die radiale Höhe eines Längszahns (28) der zweiten Längsverzahnung (12) gegenüber den übrigen Längszähnen (24) derart reduziert ist, dass ausschließlich der in der radialen Höhe reduzierte Längszahn (28) in die versperrte Zahnlücke (25) axial eingeschoben werden kann,
**dadurch gekennzeichnet,**
**dass** besagte Zahnlücke (25) durch einen durch Umformen oder durch einen mittels einer stoffschlüssigen Verbindung hergestellten Sperrabschnitt (27) des ersten Drehelements (9) oder durch einen Stift, der in einer Bohrung des ersten Drehelements (9) sitzt, versperrt ist, wobei der Sperrabschnitt (27) oder der Stift in der Zahnlücke oder in axialer Verlängerung zur Zahnlücke (25) angeordnet ist.

2. Längenausgleich nach Anspruch 1,
**dadurch gekennzeichnet,**
**dass** der in der radialen Höhe reduzierte Längszahn (28) der zweiten Längsverzahnung (12) derart ausgebildet ist, dass er bei einer Drehmomentübertragung zwischen der ersten Längsverzahnung (11) und der zweiten Längsverzahnung (12) in Anlage zu einem, der die versperrte Zahnlücke (25) bildenden, Längszähnen (13, 13') gelangt.

3. Längenausgleich nach einem der vorangehenden Ansprüche,
**dadurch gekennzeichnet,**
**dass** zwei diametral gegenüberliegende Zahnlücken (25) der ersten Längsverzahnung (11) versperrt sind und
**dass** die radiale Höhe zweier diametral gegenüberliegender Längszähne (28) der zweiten Längsverzahnung (12) reduziert sind.

4. Längenausgleich nach einem der vorangehenden Ansprüche,
**dadurch gekennzeichnet,**
**dass** die Bohrung als Gewindebohrung und der Stift als Gewindestift ausgebildet ist.

5. Längenausgleich nach einem der vorangehenden Ansprüche,
**dadurch gekennzeichnet,**
**dass** in einem Endbereich des ersten Drehelements (9) die Zahnlücke (25) durch eine Einprägung (26) in eine Stirnfläche (14) oder durch einen Stift, der in einer Axialbohrung in der Stirnfläche sitzt, versperrt ist.

6. Längenausgleich nach Anspruch 5,
**dadurch gekennzeichnet,**
**dass** die Längszähne (13, 13') der ersten Längsverzahnung (11) von der Stirnfläche (14) ausgehend verlaufen.

7. Längenausgleich nach einem der vorangehenden Ansprüche,
**dadurch gekennzeichnet,**
**dass** das erste Drehelement (9) ein Wellenzapfen und die erste Längsverzahnung (11) eine Außenlängsverzahnung ist und
**dass** das zweite Drehelement (10) eine Nabenhülse und die zweite Längsverzahnung (12) eine Innenlängsverzahnung ist.

8. Längenausgleich nach Anspruch 7,
**dadurch gekennzeichnet,**
**dass** die Innenlängsverzahnung (12) der Nabenhülse (10) durch Kaltpressen hergestellt ist.

9. Gelenkwelle mit einem Längenausgleich nach einem der vorangehenden Ansprüche,
**dadurch gekennzeichnet,**
**dass** die Gelenkwelle (1) ein mit dem zweiten Drehelement (10) fest verbundenes erstes Gelenk (2) und ein mit dem ersten Drehelement (9) fest verbundenes zweites Gelenk (3) aufweist.

10. Gelenkwelle nach Anspruch 9,
**dadurch gekennzeichnet,**
**dass** das erste Gelenk (2) und das zweite Gelenk (3) jeweils ein Kreuzgelenk ist.

## Claims

1. Length adjustment (7) for a drive shaft (1), wherein the length adjustment (7) has the following:
a first rotary element (9) with a first longitudinal toothing (11) and
a second rotary element (10) with a second longitudinal toothing (12),
wherein the first longitudinal toothing (11) and the second longitudinal toothing (12) mesh with each other and are axially displaceable to each other,
wherein in an end portion of the first rotary element (9) a tooth gap (25) between two longitudinal teeth (13, 13') of the first longitudinal toothing (11) is obstructed, and
wherein the radial height of a longitudinal tooth (28) of the second longitudinal toothing (12) is reduced relative to the residual longitudinal teeth (24) such, that only the longitudinal tooth (28) reduced in radial height can be axially inserted into the obstructed tooth gap (25),
**characterised in**
**that** said tooth gap (25) is obstructed by a locking portion (27) produced by forming or a material connection of the first rotary element (9), or by a pin resting in a bore of the first rotary element (9), wherein the locking portion (27) or the pin is arranged in the tooth gap or in axial extension to the tooth gap (25).

2. Length adjustment according to claim 1,
**characterised in**
**that** the longitudinal tooth (28) with radial height of the second longitudinal toothing (12), is formed such, that during a torque transmission between the first longitudinal toothing (11) and the second longitudinal toothing (12) the longitudinal tooth (28) with radial height comes into abutment with one of the longitudinal teeth (13, 13') forming the obstructed tooth gap (25).

3. Length adjustment according to any one of the preceding claims,
**characterised in**
**that** two diametrically opposite tooth gaps (25) of the first longitudinal toothing (11) are obstructed and
**that** the radial height of two diametrically opposite longitudinal teeth (28) of the second longitudinal toothing (12) is reduced.

4. Length adjustment according to any one of the preceding claims,
**characterised in**
**that** the bore is formed as a threaded bore and the pin is formed as a threaded pin.

5. Length adjustment according to any one of the preceding claims,
**characterised in**
**that** in an end portion of the first rotary element (9) the tooth gap (25) is obstructed by an indentation (26) into an end face (14) or by a pin, which rests in an axial bore in the end face.

6. Length adjustment according to claim 5,
**characterised in**
**that** the longitudinal teeth (13, 13') of the first longitudinal toothing (11) extend from the end face (14).

7. Length adjustment according to any one of the preceding claims,
**characterised in**
**that** the first rotary element (9) is a shaft journal and the first longitudinal toothing (11) is an outer longitudinal toothing and
**that** the second rotary element (10) is a hub sleeve and the second longitudinal toothing (12) is an inner longitudinal toothing.

8. Length adjustment according to claim 7,
**characterised in**
**that** the inner longitudinal toothing (12) of the hub sleeve (10) is produced by means of cold pressing.

9. Drive shaft with a length adjustment according to any one of the preceding claims,
**characterised in**
**that** the drive shaft (1) has a first joint (2), rigidly connected to the second rotary element (10) and a second joint (3), rigidly connected to the first rotary element (9).

10. Drive shaft according to claim 9,
**characterised in**
**that** the first joint (2) and the second joint (3) are respectively a universal joint.

## Revendications

1. Équilibrage des longueurs (7) pour un arbre de transmission (1), dans lequel l'équilibrage des longueurs (7) présente les éléments suivants :
un premier élément rotatif (9) avec une première denture longitudinale (11) et un deuxième élément rotatif (10) avec une deuxième denture longitudinale (12),
dans lequel la première denture longitudinale (11) et la deuxième denture longitudinale (12) sont en prise de dentures et déplaçables axialement l'une par rapport à l'autre,
dans lequel un entredent (25) est bloqué entre deux dents longitudinales (13, 13') de la première denture longitudinale (11) dans une région d'extrémité du premier élément rotatif (9), et
dans lequel la hauteur radiale d'une dent longitudinale (28) de la deuxième denture longitudinale (12) est réduite de telle façon par rapport aux autres dents longitudinales (24), que seule la dent longitudinale (28) dont la hauteur radiale est réduite peut être insérée axialement dans l'entredent (25) bloqué,
**caractérisé en ce que**
ledit entredent (25) est bloqué à l'aide d'une section de blocage (27) du premier élément rotatif (9), réalisée par déformation ou par liaison de matière, ou à l'aide d'une tige logée dans un perçage du premier élément rotatif (9), la section de blocage (27) ou la tige est disposée dans l'entredent ou dans le prolongement axial de l'entredent (25).

2. Équilibrage des longueurs selon la revendication 1,
**caractérisé en ce que**
la dent longitudinale (28) de la deuxième denture longitudinale (12) dont la hauteur radiale est réduite est conçue de manière à venir en appui contre l'une des dents longitudinales (13, 13') formant l'entredent (25) bloqué lors d'une transmission de couple entre la première denture longitudinale (11) et la deuxième denture longitudinale (12).

3. Équilibrage des longueurs selon l'une des revendications précédentes,
**caractérisé en ce que**
deux entredents (25) diamétralement opposés de la première denture longitudinale (11) sont bloqués, et **en ce que**
la hauteur radiale de deux dents longitudinales (28) diamétralement opposées de la deuxième denture longitudinale (12) est réduite.

4. Équilibrage des longueurs selon l'une des revendications précédentes,
**caractérisé en ce que**
le perçage est conçu comme un perçage fileté et la tige est conçue comme une tige filetée.

5. Équilibrage des longueurs selon l'une des revendications précédentes,
**caractérisé en ce que**
dans une région d'extrémité du premier élément rotatif (9), l'entredent (25) est bloqué à l'aide d'une empreinte (26) dans une surface frontale (14) ou à l'aide d'une tige logée dans un perçage axial dans la surface frontale.

6. Équilibrage des longueurs selon la revendication 5,
**caractérisé en ce que**
les dents longitudinales (13, 13') de la première denture longitudinale (11) s'étendent à partir de la surface frontale (14).

7. Équilibrage des longueurs selon l'une des revendications précédentes,
**caractérisé en ce que**
le premier élément rotatif (9) est un tourillon d'arbre et la première denture longitudinale (11) est une denture longitudinale extérieure, et **en ce que**
le deuxième élément rotatif (10) est une douille de moyeu et la deuxième denture longitudinale (12) est une denture longitudinale intérieure.

8. Équilibrage des longueurs selon la revendication 7,
**caractérisé en ce que**
la denture longitudinale intérieure (12) de la douille de moyeu (10) est réalisée par pressage à froid.

9. Arbre de transmission avec un équilibrage des longueurs selon l'une des revendications précédentes,
**caractérisé en ce que**
l'arbre de transmission (1) présente une première articulation (2) fixement reliée au deuxième élément rotatif (10) et une deuxième articulation (3) fixement reliée au premier élément rotatif (9).

10. Arbre de transmission selon la revendication 9,
**caractérisé en ce que**
la première articulation (2) et la deuxième articulation (3) sont respectivement un joint universel.
